# EUROPÄISCHE PATENTSCHRIFT

(11) **EP 2 572 569 B1**
(45) Veröffentlichungstag und Bekanntmachung des Hinweises auf die Patenterteilung: **18.01.2017**
(21) Anmeldenummer: 12173119.4
(22) Anmeldetag: 22.06.2012
(51) Int. Cl.: A01D 69/10, B60T 8/17

(54) **Selbstfahrende Erntemaschine**
Self-propelled harvester
Moissonneuse automobile

(30) Priorität: 20.09.2011 DE 102011113698
(43) Veröffentlichungstag der Anmeldung: 27.03.2013
(73) Patentinhaber: CLAAS Selbstfahrende Erntemaschinen GmbH, 33428 Harsewinkel (DE)
(72) Erfinder: SCHRAND, Stephan, 26169 Neuscharrel (DE); GERSMANN, Manfred, 48231 Warendorf (DE)

(56) Entgegenhaltungen:
- EP-A1- 0 863 062
- EP-A1- 2 009 329
- EP-A1- 2 363 014
- EP-A2- 1 366 652
- DE-A1-102007 053 266
- DE-B3-102009 017 577

## Beschreibung

Die vorliegende Erfindung betrifft eine selbstfahrende Erntemaschine, wie etwa einen Mähdrescher oder einen Feldhäcksler.

Die Notwendigkeit zur Rationalisierung der landwirtschaftlichen Produktion hat dazu geführt, dass im Laufe der Jahre immer größere Erntemaschinen gebaut wurden, die in der Lage sind, immer breitere Erntevorsätze zu tragen und große Flächen in kurzer Zeit abzuernten. Derartige Maschinen können in einer Erntesaison größere Flächen abernten, als viele landwirtschaftliche Betriebe besitzen. Für eine wirtschaftliche Nutzung der Maschinen ist es daher notwendig, diese in kurzer Zeit von einer zu beerntenden Fläche auf die nächste, eventuell weit entfernte Fläche eines anderen Betriebs verlagern zu können. D.h. gleichzeitig mit der Größe steigen auch die Anforderungen an die Geschwindigkeit, mit der sich die Erntemaschinen im Straßenverkehr bewegen können.

Diese Geschwindigkeit ist in der Regel weniger durch die Leistungsfähigkeit eines Antriebsaggregats begrenzt als durch die Notwendigkeit, die Erntemaschine auch aus hoher Geschwindigkeit auch sicher zum Stehen bringen zu können. Ein Problem beim Abbremsen von Erntemaschinen resultiert aus der ungleichmäßigen Gewichtsverteilung auf ihre Achsen. Da ein Erntevorsatz im Allgemeinen an einer Karosserie der Erntemaschine vor der vordersten Achse montiert ist, reduziert er die von einer hinteren Achse getragene Last und folglich auch die maximale Bremskraft, die zwischen Rädern der hinteren Achse und dem befahrenen Untergrund übertragen werden kann, ohne dass die Räder dieser Achse blockieren. Beim Bremsen wird zusätzlich die Last auf der Hinterachse weiter verringert. Die Tatsache, dass eine geringe Bremskraft genügt, um die hinteren Räder zum Blockieren zu bringen, und dass diese Bremskraft mit steigender Bremsverzögerung immer weiter abnimmt, führt dazu, dass herkömmliche Erntemaschinen nur an ihren vorderen Rädern Bremsen aufweisen. Diese müssen im Betrieb große Energiemengen dissipieren und können bei wiederholtem Abbremsen aus hoher Geschwindigkeit oder bei längeren Gefällefahrten überhitzen.

Aus der DE 10 2007 053 266 A1 ist ein landwirtschaftlicher Schlepper mit mindestens drei antreibbaren Fahrachsen bekannt, auf deren Räder Bremsen einwirken, die alle mit einem Antiblockiersystem ausgestattet sind.

Aufgabe der Erfindung ist daher, eine selbstfahrende Erntemaschine zu schaffen, die auch aus höherer Geschwindigkeit sicher abbremsbar ist.

Die Aufgabe wird gelöst durch eine selbstfahrende Erntemaschine mit wenigstens zwei Achsen mit vorderen und hinteren Rädern, mit auf die vorderen Räder wirkenden vorderen Bremsen, mit auf die hinteren Räder wirkenden hinteren Bremsen und einem Antiblockiersystem zum Steuern von wenigstens einigen der Bremsen, wobei das Antiblockiersystem nur auf die Bremsen der hinteren Räder wirkt.

Die Erntemaschine ist dadurch besonders kostengünstig realisierbar, da das Antiblockiersystem nur auf die Bremsen der hinteren Räder wirkt, weil bei diesen die Gefahr des Blockierens in Folge der bei Verzögerung abnehmenden Achslast besonders hoch ist. Bei den vorderen Rädern ist aufgrund der erheblich höheren Achslast die Gefahr des Blockierens auch ohne Steuerung durch ein Antiblockiersystem relativ gering. Diese geringe Gefahr des Blockierens kann auch deshalb hingenommen werden, weil bei den meisten selbstfahrenden Erntemaschinen die hinteren Räder gelenkt sind und eine Blockade nur der vorderen Räder daher nicht zwangsläufig zu einem Verlust der Lenkbarkeit führt.

Eine Besonderheit, die Erntemaschinen von Straßenfahrzeugen wie LKW und PKW unterscheidet, ist die Tatsache, dass erstere meist vordere und hintere Räder in unterschiedlichen Größen haben, wobei die Radgröße durch Bestückung mit unterschiedlichen Reifentypen sogar bei einer gleichen Maschine variieren kann. Dieser Tatsache sollte das Antiblockiersystem Rechnung tragen. Ein Antiblockiersystem, das in an sich bekannter Weise eingerichtet ist, für jedes Rad dessen Schlupf anhand einer globalen Fahrzeuggeschwindigkeit und einer Winkelgeschwindigkeit des betreffenden Rades abzuschätzen und den Bremsdruck einer auf das Rad wirkenden Bremse zu reduzieren, wenn der Schlupf einen Grenzwert überschreitet, sollte daher zweckmäßigerweise bei der Schlupfabschätzung zum Umrechnen zwischen Winkelgeschwindigkeit und Umfangsgeschwindigkeit des Rades einen für vordere und hintere Räder unterschiedlichen Faktor verwenden.

Um die Tatsache berücksichtigen zu können, dass an einem Rad der Erntemaschine Reifen mit unterschiedlichen Durchmessern montiert sein können, sollte der Faktor veränderbar sein.

Um den Faktor zu verändern, kann die Möglichkeit geschaffen werden, ihn - sei es durch unmittelbare Eingabe des Faktors oder durch Eingabe der Abmessungen der jeweils verwendeten Reifen - an einer Benutzerschnittstelle einzustellen.

Eine andere Möglichkeit ist, eine automatische Anpassung des Faktors anhand von in einer Referenzfahrsituation gemessener Winkelgeschwindigkeiten der Räder vorzunehmen. Als Referenzfahrsituation eignet sich insbesondere eine Fahrsituation ohne Betätigung der Bremsen, vorzugsweise bei Geradeausfahrt.

Um die Wendigkeit der Erntemaschine, insbesondere beim Einsatz auf einem Feld, zu verbessern, können wenigstens eine Bremse, die auf ein Rad an einer linken Seite der Erntemaschine wirkt, und wenigstens eine Bremse, die auf ein Rad an einer rechten Seite der Erntemaschine wirkt, unabhängig voneinander betätigbar sein.

Da im Feldeinsatz, auf nachgiebigem Untergrund, stark schwankende Schlupfwerte auch bei mäßiger Verzögerung auftreten können, insbesondere falls rechte und linke Seite der Erntemaschine unterschiedlich gebremst werden, kann es zweckmäßig sein, eine unabhängige Betätigung von Bremsen an linker und rechter Seite der Erntemaschine nur in einem inaktiven Zustand des Antiblockiersystems zu ermöglichen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung des Fahrwerks einer erfindungsgemäßen Erntemaschine;
- Fig. 2: einen typischen Zusammenhang zwischen der auf ein Bremspedal der Erntemaschine ausgeübten Betätigungskraft und der daraus resultierenden Bremskraft an vorderen und hinteren Rädern; und
- Fig. 3: eine schematische Darstellung des Fahrwerks gemäß einer zweiten Ausgestaltung der Erfindung.

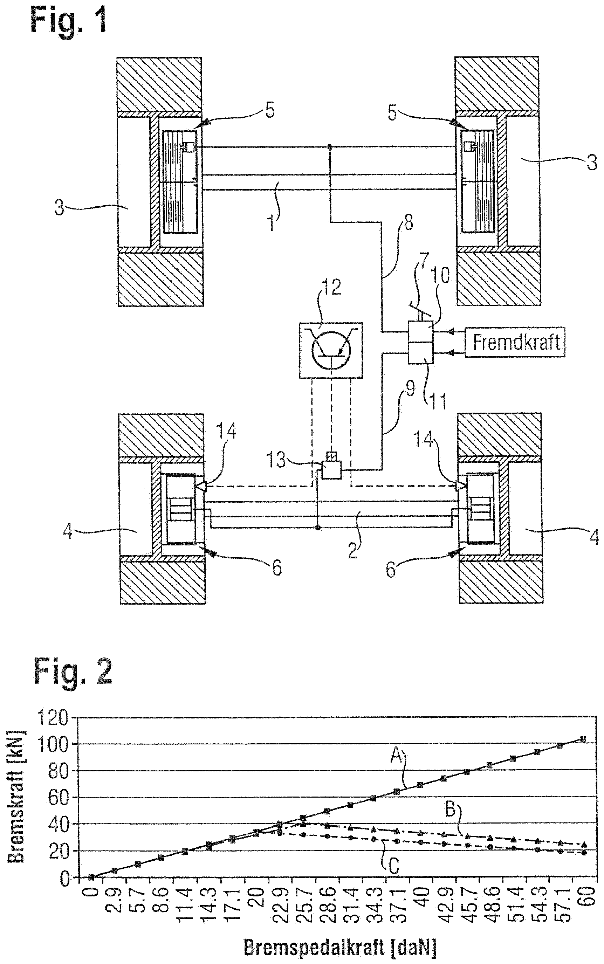

Fig. 1 ist eine schematische Darstellung des Fahrwerks einer selbstfahrenden Erntemaschine wie etwa eines Mähdreschers oder eines Feldhäckslers. An der Karosserie einer solchen Erntemaschine ist bekanntlich vor der vorderen Achse ein Erntevorsatz montierbar, der je nach Art des Ernteguts unterschiedlich aufgebaut sein kann und in der Figur nicht gezeigt ist. Zumindest wenn ein solcher Erntevorsatz montiert ist, liegt der gemeinsame Schwerpunkt von Karosserie und Erntevorsatz der Erntemaschine näher an der vorderen Achse 1 als an einer hinteren Achse 2 des Fahrwerks, sodass der Anteil des Gewichts der Maschine, den die vordere Achse 1 trägt, größer ist als der von der hintere Achse 2 getragene Anteil. Um das Gewicht der Maschine auf dem befahrenen Untergrund gleichmäßig zu verteilen, sind daher vordere Räder 3 größer als lenkbare hintere Räder 4. Da der Schwerpunkt der Maschine höher liegt als die Achsen 1, 2, erhöht sich der von der vorderen Achse 1 getragene Anteil am Gewicht noch, wenn die Maschine in der Fahrt verzögert wird.

Jedes Rad 3, 4 ist mit einer Bremse versehen, und zwar hier einer - vorzugsweise nassen - Lamellenbremse 5 im Falle der vorderen Räder 3 und einer Trommelbremse 6 im Falle der hinteren Räder 4. Die Bremsen 5 der vorderen Räder 3 und die Bremsen 6 der hinteren Räder 4 gehören zwei voneinander getrennten Bremskreisen 8, 9 an, die zwar beide über ein gleiches Bremspedal 7 fremdkraftunterstützt gesteuert sind, hierfür aber zwei über das Bremspedal 7 betätigte Betriebsbremsdruckventile 10, 11 mit unterschiedlichen Kennlinien verwenden, so dass der Zusammenhang zwischen der auf das Bremspedal 7 von einem Fahrer der Maschine ausgeübten Betätigungskraft und dem daraus resultierenden Bremsdruck im Bremskreis 8 bzw. 9 unterschiedlich ist. Das Verhältnis zwischen den bei gegebener Betätigungskraft in den zwei Bremskreisen 8, 9 auftretenden Bremsdrücken ist unter Berücksichtigung der Durchmesser der Räder 3, 4 und der Wirksamkeit ihrer Bremsen 5, 6 so festgelegt, dass die resultierende, zwischen Reifen und Untergrund wirkende Bremskraft an allen Rädern 3, 4 bei niedrigen Betätigungskräften gleich ist.

Fig. 2 zeigt diesen Sachverhalt anhand mehrerer Graphen, die jeweils die Bremskraft als Funktion der Betätigungskraft für vordere und hintere Räder 3, 4 zeigen. Bei niedrigen Werten der Betätigungskraft von 0 bis ca. 20 daN sind die Werte der an vorderen und hinteren Rädern 3, 4 auftretenden Bremskräfte so gut wie nicht voneinander zu unterscheiden. Dieser niedrige Betätigungskraftbereich entspricht den Bremsverzögerungen, die beispielsweise bei Gefällefahrt oder bei vorausschauendem Fahren im Straßenverkehr benötigt werden. Identische Bremskräfte an allen Rädern 3, 4 führen dazu, dass auch die beim Bremsen freigesetzte Wärmeenergie an vorderen und hinteren Rädern 3, 4 gleich ist, so dass gegenüber einer herkömmlichen, nur an den vorderen Rädern gebremsten Erntemaschine eine erhebliche Entlastung der Bremsen 5 an den vorderen Rädern 3 erreicht wird.

Je stärker das Bremspedal 7 getreten wird und je höher die daraus resultierenden Bremskräfte an den vorderen und hinteren Rädern 3, 4 sind, umso stärker ist die Bremsverzögerung der Erntemaschine, und umso kleiner ist der Anteil ihres Gewichts, der von der hinteren Achse 2 getragen wird. Dies hat zur Folge, dass ab einer Bremskraft von hier ca. 30 kN der Schlupf zwischen dem hinteren Rädern 4 und dem Untergrund zu divergieren beginnt. Diese Bremskraft wird hier bei einer Betätigungskraft von ca. 21 daN erreicht. Wenn in dieser Situation der Bremsdruck weiter erhöht würde, würden die hinteren Räder 4 blockieren, und eine auf sie ausgeübte Lenkbewegung hätte keinen Einfluss mehr auf die Fahrrichtung der Maschine.

Um eine solche Situation auszuschließen, ist, wieder bezogen auf Fig. 1, dem hinteren Bremskreis 9 ein Antiblockiersystem zugeordnet, zu dem ein Steuergerät 12, ein Drucksteuerventil 13, Drehzahlsensoren 14 an den hinteren Rädern und Drehzahlsensoren 15 an den vorderen Rädern gehören. Das Steuergerät 12 empfängt ein für die Fahrgeschwindigkeit der Maschine repräsentatives Signal von außen oder erzeugt ein solches Signal intern, z.B. anhand von mit dem jeweiligen Raddurchmesser gewichteten und untereinander gemittelten Drehzahlsignalen der Drehzahlsensoren 14 und der Drehzahlsensoren 15. Eine übermäßige Abweichung des Signals eines der Sensoren 14 kann dann auf eine einsetzende Blockade des zugeordneten hinteren Rades 4 hinweisen.

Denkbar ist auch, alleine die Signale der Drehzahlsensoren 14 auszuwerten und eine Verringerung der gemessenen Drehzahl, die stärker ist als eine beim herrschenden Bremsdruck zu erwartende Verzögerung der Maschine, als Hinweis auf eine Blockade aufzufassen. Bei dieser Vorgehensweise braucht das Antiblockiersystem die Drehzahlsensoren 15 an den vorderen Rädern 3 nicht zu umfassen.

Sobald das Steuergerät 12, nach welchem Kriterium auch immer, eine beginnende Blockade eines der hinteren Räder 4 erfasst, betätigt sie das Drucksteuerventil 13, um den auf die Bremsen 6 wirkenden Druck unter den am Betriebsbremsdruckventil 11 eingestellten Wert zu reduzieren. So nimmt, wiederum mit Bezug auf Figur 2, wenn die Betätigungskraft der Bremse 7 über 21 daN ansteigt, zwar der Bremsdruck im vorderen Bremskreis 8 weiterhin linear mit der Betätigungskraft zu, wie durch die Gerade A dargestellt, wohingegen, wie durch Kurven B, C dargestellt, durch den Eingriff des Steuergeräts 12 der Bremsdruck im hinteren Bremskreis 9 stagniert bzw., mit zunehmender Verzögerung durch die Bremsen 5 an der Vorderachse und eine dadurch abnehmende Last auf der hinteren Achse 2, sogar abnimmt.

Bei welcher Betätigungskraft der Bremsen 6 das Antiblockiersystem tatsächlich wirksam wird, hängt von der Gewichtsverteilung der Maschine ab. Wenn diese ohne Erntevorsatz auf einer Straße unterwegs ist, ist die Gewichtsverteilung auf die Achsen 1, 2 ausgeglichener als beim Ernteeinsatz auf dem Feld, mit montiertem Erntevorsatz. Daher wird, wie anhand der Kurven B, C der Fig. 2 zu erkennen, das Antiblockiersystem bei Fahrt ohne Erntevorsatz, entsprechend der Kurve B, erst bei einer höheren Betätigungskraft wirksam als im Falle der Fahrt mit Erntevorsatz, wie repräsentiert durch die Kurve C.

Wenn eine Messung der Geschwindigkeit der Maschine auf gemessenen Drehzahlen der Räder 3 und/oder 4 beruht, dann muss das Steuergerät 12 (oder ein Tachometer, falls das Steuergerät 12 das Geschwindigkeitssignal von diesem empfängt) den Radius der betreffenden Räder kennen, um von den Sensoren 14 und/oder 15 gemessene Drehzahlen korrekt in die Fahrzeuggeschwindigkeit umrechnen zu können. Da die Möglichkeit besteht, an den Räder 3 bzw. 4 Reifen mit unterschiedlichen Reifendurchmessern einzusetzen, ist, um eine korrekte Geschwindigkeitsmessung zu ermöglichen, an einem Armaturenbrett der Maschine eine Benutzerschnittstelle vorgesehen, die es dem Fahrer erlaubt, den Durchmesser der jeweils verwendeten Reifen zu spezifizieren. Ein dort eingegebener Durchmesser der Reifen der hinteren Räder 4 kann vom Steuergerät 12 genutzt werden, um die Fahrzeuggeschwindigkeit in eine für jedes der hinteren Räder 4 erwartete Winkelgeschwindigkeit umzurechnen und den Schlupf jedes Rades 4 anhand einer Differenz zwischen der anhand der Fahrzeuggeschwindigkeit erwarteten und der tatsächlich vom zugeordneten Drehzahlsensor 14 gemessenen Winkelgeschwindigkeit abzuschätzen, oder um eine anhand der gemessenen Winkelgeschwindigkeit jedes Rades 4 berechnete Umfangsgeschwindigkeit mit der Fahrgeschwindigkeit der Maschine zu vergleichen.

Um sicherzustellen, dass ein übermäßiger Schlupf der hinteren Räder 4 auch dann noch erkannt werden kann, wenn die Durchmesser der Räder 3, 4 nicht korrekt eingegeben sind, kann vorgesehen werden, dass das Steuergerät 12 in einer Referenzfahrsituation, insbesondere bei unbeschleunigter Geradeausfahrt, Drehzahlwerte der Sensoren 14, 15 erfasst und, wenn das Verhältnis dieser Drehzahlwerte stärker als zugelassen vom Verhältnis der gespeicherten Raddurchmesser abweicht, einen der gespeicherten Raddurchmesser so anpasst, dass Gleichheit der Verhältnisse erzielt wird.

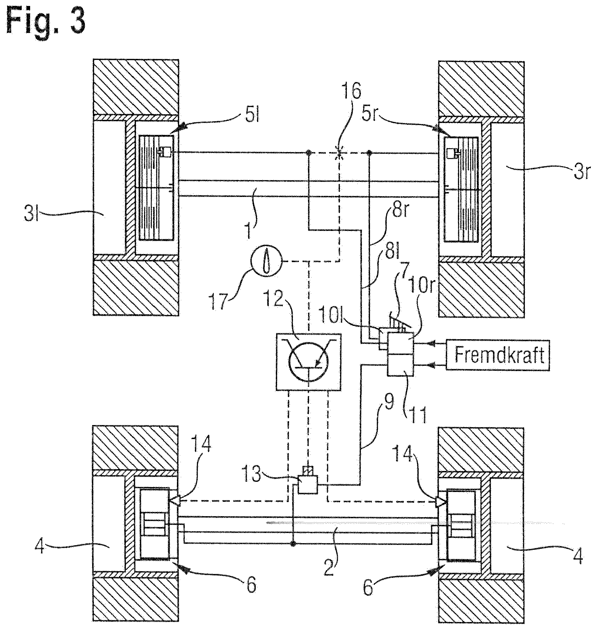

Einer in Fig. 3 dargestellten weiterentwickelten Ausgestaltung zufolge ist der vordere Bremskreis 8 unterteilt in einen linken Teilkreis 81 und einen rechten Teilkreis 8r, die jeweils die Bremse 51 des linken vorderen Rades 31 bzw. die Bremse 5r des linken vorderen Rades 3r über Betriebsbremsventile 101 bzw. 10r steuern. Das Bremspedal 7 ist in zwei Freiheitsgraden bewegbar, um eine unabhängige Steuerung der Betrzebsbremsventile 101, 10r zu ermöglichen. Z.B. kann das Bremspedal in einem Kugelgelenk aufgehängt sein, um einerseits durch Schwenken um eine quer zur Fahrtrichtung orientierte Achse, entsprechend der Bewegung eines herkömmlichen Bremspedals, die beiden rechts und links von einer zu der Achse senkrechten Mittelebene des Bremspedals angeordneten Betriebsbremsventile 101, 10r gleich zu beaufschlagen, und andererseits durch Drücken des Bremspedals überwiegend auf der linken bzw. rechten Seite das linke bzw. rechte Betriebsbremsventil stärker als das jeweils andere zu betätigen. So kann ein Fahrer, insbesondere im Feldeinsatz, durch Treten des Bremspedals 7 auf der linken oder der rechten Seite die vorderen Räder 31, 3r unabhängig voneinander bremsen und so die Maschine in eine Kurve steuern. Da der Radius einer solchen Kurve in keinem eindeutigen Zusammenhang mit dem Lenkwinkel der hinteren Räder 4 steht, kann das Steuergerät 12 nicht zuverlässig beurteilen, inwieweit unterschiedliche Drehzahlen des rechten und des linken hinteren Rades 4 auf Schlupf zurückzuführen sind. Daher deaktiviert sich bei dieser Ausgestaltung das Steuergerät 12, sobald die Differenz zwischen den von den beiden Betriebsbremsventilen 101, 10r in den Teilkreisen 81, 8r eingestellten Bremsdrücken einen vorgegebenen Wert oder einen vorgegebenen Prozentsatz überschreitet.

Alternativ kann vorgesehen werden, dass unter den gleichen Bedingungen der gesamte hintere Bremskreis 9 deaktiviert wird.

Einer weiteren, ebenfalls in Fig. 3 veranschaulichten Alternative zufolge sind der Bremskreis 81 des linken vorderen Rades und der Bremskreis 8r des rechten vorderen Rades 3 über ein Wegeventil 16 verbindbar, das über einen Schalter 17 am Armaturenbrett gesteuert 12. Solange das Ventil 16 geschlossen ist, sind Bremsdrücke in beiden Teilen des Bremskreises 8 gleich, und ein selektives Bremsen eines der Räder 3 ist nicht möglich, auch wenn beide Betriebsbremsventile 101, 10r unterschiedlich stark betätigt sind. Der Schalter 17 kontrolliert gleichzeitig das Steuergerät 12 derart, dass es bei offenem Ventil 16 aktiv und bei geschlossenem Ventil 16 inaktiv ist. Auf diese Weise ermöglicht der Schalter 17 das Umschalten zwischen zwei Fahrmodi, einem, der bei inaktivem Antiblockiersystem eine Unterschiedliche Abbremsung von linken und rechten Rädern erlaubt und so das Fahren von Kurven erleichtert, und einem, in dem Antiblockiersystem aktiv ist, aber eine Unterstützung des Kurvenfahrens durch seitenselektives Bremsen ausgeschlossen ist. Während der erste Modus insbesondere für die Feldarbeit geeignet ist, taugt der zweite insbesondere für Straßenfahrt.

Denkbar ist anstelle der manuellen Umschaltung über den Schalter 17 auch eine automatische Umschaltung zwischen den zwei Modi, beispielsweise in Abhängigkeit von der Fahrgeschwindigkeit der Maschine. So kann beispielsweise das Steuergerät 12 eingerichtet sein, um nur bei Überschreitung einer - bei der Feldarbeit normalerweise nicht erreichten - Geschwindigkeit aktiv zu werden und dann auch das Ventil 16 zu öffnen.

Eine andere Möglichkeit ist, einen Sensor oder andere geeignete Mittel vorzusehen, um zu erfassen, ob die Erntemaschine einen Erntevorsatz trägt oder nicht. Da das Tragen eines solchen Vorsatzes bei der Feldarbeit erforderlich, bei Straßenfahrt aber häufig unzulässig ist, kann vorgesehen werden, dass das Steuergerät 12 inaktiv wird und das Ventil 16 schließt, wenn erfasst wird, dass ein Erntevorsatz montiert worden ist und sich das Steuergerät 12 nach Abkopplung des Erntevorsatzes selbsttätig wieder einschaltet und das Ventil 16 öffnet.

### Bezugszeichen

- 1: vordere Achse
- 2: hintere Achse
- 3: vordere Räder
- 4: hintere Räder
- 5: Lamellenbremse
- 6: Trommelbremse
- 7: Bremspedal
- 8: vorderer Bremskreis
- 9: hinterer Bremskreis
- 10: Betriebsbremsventil
- 10r: Betriebsbremsventil
- 101: Betriebsbremsventil
- 11: Betriebsbremsventil
- 12: Steuergerät
- 13: Drucksteuerventil
- 14: Drehzahlsensor
- 15: Drehzahlsensor
- 16: Ventil
- 17: Schalter

## Patentansprüche

1. Selbstfahrende Erntemaschine mit wenigstens zwei Achsen (1, 2) mit vorderen und hinteren Rädern (3, 4) und auf die vorderen Räder (3) wirkenden vorderen Bremsen (5), sowie auf die hinteren Räder (4) wirkende hintere Bremsen (6) und ein Antiblockiersystem (11-14) zum Steuern von wenigstens einigen der Bremsen (6), **dadurch gekennzeichnet, dass** das Antiblockiersystem (11-14) nur auf die Bremsen (6) der hinteren Räder (4) wirkt.

2. Selbstfahrende Erntemaschine nach Anspruch 1, **dadurch gekennzeichnet, dass** das Antiblockiersystem (11-14) eingerichtet ist, für wenigstens eines der Räder (4) dessen Schlupf anhand einer globalen Fahrzeuggeschwindigkeit und einer Winkelgeschwindigkeit des Rades (4) abzuschätzen und den Bremsdruck einer auf das Rad (4) wirkenden Bremse (6) zu reduzieren, wenn der Schlupf einen Grenzwert überschreitet, wobei ein zum Umrechnen zwischen Winkelgeschwindigkeit und Umfangsgeschwindigkeit des Rades verwendeter Faktor für vordere und hintere Räder unterschiedlich ist.

3. Selbstfahrende Erntemaschine nach Anspruch 2, **dadurch gekennzeichnet, dass** der Faktor veränderbar ist.

4. Selbstfahrende Erntemaschine nach Anspruch 3, **dadurch gekennzeichnet, dass** der Faktor an einer Benutzerschnittstelle einstellbar ist.

5. Selbstfahrende Erntemaschine nach Anspruch 3, **dadurch gekennzeichnet, dass** das Antiblockiersystem (11-14) eingerichtet ist, den Faktor anhand von in einer Referenzfahrsituation gemessener Winkelgeschwindigkeiten der Räder (3, 4) abzuschätzen.

6. Selbstfahrende Erntemaschine nach einem der vorhergehenden Ansprüche, **dadurch gekennzeichnet, dass** wenigstens eine Bremse (5l), die auf ein Rad (31) an einer linken Seite der Erntemaschine wirkt, und wenigstens eine Bremse (5r), die auf ein Rad (3r) an einer rechten Seite der Erntemaschine wirkt, unabhängig voneinander betätigbar sind.

7. Selbstfahrende Erntemaschine nach Anspruch 6, **dadurch gekennzeichnet, dass** die Bremsen zwischen einem ersten Betriebszustand, in dem die auf das Rad (31) an einer linken Seite der Erntemaschine wirkende Bremse (51) und die auf das Rad (31) an einer rechten Seite der Erntemaschine wirkende Bremse (5r) unabhängig voneinander betätigbar sind, und einem zweiten Betriebszustand umschaltbar sind, in dem diese Bremsen (51, 5r) gemeinsam betätigbar sind, und dass das Antiblockiersystem (11-14) in dem ersten Betriebszustand inaktiv und im zweiten Betriebszustand aktiv ist.

8. Selbstfahrende Erntemaschine nach einem der vorhergehenden Ansprüche, **dadurch gekennzeichnet, dass** das Antiblockiersystem (11-14) bei Unterschreitung einer Grenzgeschwindigkeit in den inaktiven Zustand übergeht.

9. Selbstfahrende Erntemaschine nach einem der vorhergehenden Ansprüche, **dadurch gekennzeichnet, dass** das Antiblockiersystem (11-14) aktiv ist, wenn ein Erntevorsatz nicht an der Erntemaschine montiert ist, und inaktiv ist, wenn der Erntevorsatz montiert ist.

## Claims

1. A self-propelled harvester comprising at least two axles (1, 2) with front and rear wheels (3, 4) and front brakes (5) acting on the front wheels (3) and rear brakes (6) acting on the rear wheels (4) and an anti-lock system (11-14) for controlling at least some of the brakes (6), **characterised in that** the anti-lock system (11-14) acts only on the brakes (6) of the rear wheels (4).

2. A self-propelled harvester according to claim 1 **characterised in that** the anti-lock system (11-14) is adapted for at least one of the wheels (4) to estimate its slip on the basis of an overall vehicle speed and an angular speed of the wheel (4) and to reduce the braking force of a brake (6) acting on the wheel (4) if the slip exceeds a limit value, wherein a factor that is used for conversion between angular speed and peripheral speed of the wheel is different for front and rear wheels.

3. A self-propelled harvester according to claim 2 **characterised in that** the factor is variable.

4. A self-propelled harvester according to claim 3 **characterised in that** the factor is adjustable at a user interface.

5. A self-propelled harvester according to claim 3 **characterised in that** the anti-lock system (11-14) is adapted to estimate the factor on the basis of angular speeds of the wheels (3, 4), that are measured in a reference travel situation.

6. A self-propelled harvester according to one of the preceding claims **characterised in that** at least one brake (5l) which acts on a wheel (3l) at a left-hand side of the harvester and at least one brake (5r) which acts on a wheel (3r) at a right-hand side of the harvester are actuable independently of each other.

7. A self-propelled harvester according to claim 6 **characterised in that** the brakes can be switched over between a first operating state in which the brake (5l) which acts on the wheel (3l) at a left-hand side of the harvester and the brake (5r) which acts on the wheel (3r) at a right-hand side of the harvester are actuable independently of each other and a second operating state in which said brakes (5l, 5r) are jointly actuable and that the anti-lock system (11-14) is inactive in the first operating state and active in the second operating state.

8. A self-propelled harvester according to one of the preceding claims **characterised in that** the anti-lock system (11-14) transitions into the inactive state when the speed falls below a limit speed.

9. A self-propelled harvester according to one of the preceding claims **characterised in that** anti-lock system (11-14) is active when a harvesting attachment is not mounted to the harvester and inactive when the harvesting attachment is mounted.

## Revendications

1. Machine de récolte automotrice comportant au moins deux essieux (1, 2) pourvus de roues avant et arrière (3, 4) et des freins avant (5) agissant sur les roues avant (3) ainsi que des freins arrière (6) agissant sur les roues arrière (4) et un système antiblocage (11-14) pour commander au moins certains des freins (6), **caractérisée en ce que** le système antiblocage (11-14) agit seulement sur les freins (6) des roues arrière (4).

2. Machine de récolte automotrice selon la revendication 1, **caractérisée en ce que** le système antiblocage (11-14) est conçu, pour au moins une des roues (4), pour estimer son patinage à l'aide d'une vitesse globale du véhicule et d'une vitesse angulaire de la roue (4) et pour réduire la pression de freinage d'un frein (6) agissant sur la roue (4) lorsque le patinage dépasse une valeur limite, un facteur utilisé pour la conversion entre vitesse angulaire et vitesse circonférentielle de la roue étant différent pour les roues avant et arrière.

3. Machine de récolte automotrice selon la revendication 2, **caractérisée en ce que** le facteur est variable.

4. Machine de récolte automotrice selon la revendication 3, **caractérisée en ce que** le facteur est réglable sur une interface utilisateur.

5. Machine de récolte automotrice selon la revendication 3, **caractérisée en ce que** le système antiblocage (11-14) est conçu pour estimer le facteur à l'aide de vitesses angulaires des roues (3, 4) mesurées dans une situation de conduite de référence.

6. Machine de récolte automotrice selon l'une des revendications précédentes, **caractérisée en ce qu'**au moins un frein (51), qui agit sur une roue (31) d'un côté gauche de la machine de récolte, et au moins un frein (5r), qui agit sur une roue (3r) d'un côté droit de la machine de récolte, peuvent être actionnés indépendamment l'un de l'autre.

7. Machine de récolte automotrice selon la revendication 6, **caractérisée en ce que** les freins peuvent être commutés entre un premier état de fonctionnement, dans lequel le frein (51) agissant sur la roue (31) d'un côté gauche de la machine de récolte et le frein (5r) agissant sur la roue (31) d'un côté droit de la machine de récolte peuvent être actionnés indépendamment l'un de l'autre, et un deuxième état de fonctionnement, dans lequel ces freins (51, 5r) peuvent être actionnés ensemble, et **en ce que** le système antiblocage (11-14) est inactif dans le premier état de fonctionnement et actif dans le deuxième état de fonctionnement.

8. Machine de récolte automotrice selon l'une des revendications précédentes, **caractérisée en ce que** le système antiblocage (11-14) passe dans l'état inactif lorsque la vitesse devient inférieure à une vitesse limite.

9. Machine de récolte automotrice selon l'une des revendications précédentes, **caractérisée en ce que** le système antiblocage (11-14) est actif lorsqu'un outil frontal de récolte n'est pas monté sur la machine de récolte et est inactif lorsque l'outil frontal de récolte est monté.
